# EUROPÄISCHE PATENTSCHRIFT

(11) **EP 4 042 081 B1**
(45) Veröffentlichungstag und Bekanntmachung des Hinweises auf die Patenterteilung: **10.09.2025**
(21) Anmeldenummer: 20792290.7
(22) Anmeldetag: 05.10.2020
(51) Int. Cl.: F25J 1/00, F25J 1/02, F25J 3/04

(54) **VERFAHREN ZUM ÜBERWACHEN EINER VERFAHRENSTECHNISCHEN ANLAGE UND VERFAHRENSTECHNISCHE ANLAGE**
METHOD FOR MONITORING A PROCESS ENGINEERING SYSTEM AND PROCESS ENGINEERING SYSTEM
PROCÉDÉ DE SURVEILLANCE D'UNE INSTALLATION TECHNIQUE ET INSTALLATION TECHNIQUE

(30) Priorität: 10.10.2019 EP 19020564
(43) Veröffentlichungstag der Anmeldung: 17.08.2022
(73) Patentinhaber: Linde GmbH, 82049 Pullach (DE)
(72) Erfinder: KOCH, Michael, 80538 München (DE); SLABY, Oliver, 81547 München (DE)
(74) Vertreter: Imhof, Dietmar
(86) Internationale Anmeldenummer: PCT/EP2020/025447
(87) Internationale Veröffentlichungsnummer: WO 2021/069098

(56) Entgegenhaltungen:
- EP-A1- 1 921 406
- DE-A1- 102016 115 331
- DE-T5- 112009 000 224
- US-A1- 2018 032 940

## Beschreibung

Die Erfindung betrifft ein Verfahren zum Überwachen einer verfahrenstechnischen Anlage wie z.B. einer Luftzerlegungsanlage, sowie ein Rechensystem zur Durchführung des Verfahrens und eine verfahrenstechnische Anlage.

### Stand der Technik

Als verfahrenstechnische Anlagen werden üblicherweise Anlagen zur Durchführung von Stoffänderungen und/oder Stoffumsetzungen mit Hilfe zweckgerichteter physikalischer und/oder chemischer und/oder biologischer und/oder nuklearer Wirkungsabläufe verstanden. Solche Änderungen und Umsetzungen umfassen typischerweise Zerkleinern, Sieben, Mischen, Wärmeübertragen, Rektifizieren, Kristallisieren, Trocknen, Abkühlen, Abfüllen und überlagerte Stoffumwandlungen, wie chemische, biologische oder nukleare Reaktionen.

Ein typischer Vertreter der Zerlegung eines Einsatzfluidstroms in einzelne Fluidkomponenten ist die Luftzerlegung. Die Herstellung von Luftprodukten in flüssigem oder gasförmigem Zustand durch Tieftemperaturzerlegung von Luft in (kryogenen) Luftzerlegungsanlagen (engl. air separation unit, ASU) ist bekannt und beispielsweise bei H.-W. Häring (Hrsg.), Industrial Gases Processing, Wiley-VCH, 2006, insbesondere Abschnitt 2.2.5, "Cryogenic Rectification", beschrieben.

Luftzerlegungsanlagen weisen Destillationssäulensysteme auf, die beispielsweise als Zweisäulensysteme, insbesondere als klassische Linde-Doppelsäulensysteme, aber auch als Drei- oder Mehrsäulensysteme ausgebildet sein können. Neben den Destillationssäulen zur Gewinnung von Stickstoff und/oder Sauerstoff in flüssigem und/oder gasförmigem Zustand (beispielsweise flüssigem Sauerstoff, LOX, gasförmigem Sauerstoff, GOX, flüssigem Stickstoff, LIN und/oder gasförmigem Stickstoff, GAN), also den Destillationssäulen zur Stickstoff-Sauerstoff-Trennung, können Destillationssäulen zur Gewinnung weiterer Luftkomponenten, insbesondere der Edelgase Krypton, Xenon und/oder Argon, vorgesehen sein. Destillationssäulen werden auch als Destillationskolonnen bezeichnet.

Solche verfahrenstechnischen Anlagen werden während ihres Betriebs in aller Regel überwacht, wobei insbesondere auch eine letztlich angefallene Leistungsaufnahme bzw. ein angefallener Energieverbrauch ermittelt werden können. Damit kann ggf. im Nachhinein ermittelt werden, wieviel Energie möglicherweise eingespart hätte werden können. DE 11 2009 000224 T5 zeigt ein Verfahren zum Überwachen einer verfahrenstechnischen Anlage, bei dem unter Verwendung eines Modells der verfahrenstechnischen Anlage, aus während eines Betriebs der verfahrenstechnischen Anlage auftretenden, tatsächlichen Werten wenigstens eines Betriebsparameters der verfahrenstechnischen Anlage, Werte wenigstens eines Leistungsparameters der verfahrenstechnischen Anlage ermittelt werden.

Die vorliegende Erfindung stellt sich vor diesem Hintergrund die Aufgabe, den Betrieb einer verfahrenstechnischen Anlage, insbesondere hinsichtlich ihrer Effizienz, zu verbessern.

### Offenbarung der Erfindung

Diese Aufgabe wird durch ein Verfahren zum Überwachen einer verfahrenstechnischen Anlage sowie ein Rechensystem zur Durchführung des Verfahrens und eine verfahrenstechnische Anlage mit den Merkmalen der unabhängigen Patentansprüche gelöst. Ausgestaltungen sind Gegenstand der abhängigen Patentansprüche sowie der nachfolgenden Beschreibung.

### Vorteile der Erfindung

Die vorliegende Erfindung betrifft ein Verfahren zum Überwachen einer verfahrenstechnischen Anlage, wie sie beispielsweise vorstehend näher erläutert wurde, und zwar unter Verwendung eines Modells der verfahrenstechnischen Anlage.

Ein solches Modell der verfahrenstechnischen Anlage bildet die Anlage, insbesondere einen Betriebszustand der Anlage, (digital) ab und wird beispielsweise auf einem geeigneten Rechensystem wie einem Computer ausgeführt. Das Modell kann dabei mit Eingabewerten gespeist werden und es gibt entsprechende Ausgabewerte aus, und zwar so, wie dies (idealerweise) auch beim Betrieb der Anlage selbst der Fall wäre. Dies bedeutet auch, dass verschiedene Betriebsparameter der Anlage wie z.B. ein Fluss eines Mediums (beispielsweise Luft oder ein Bestandteil davon wie Sauerstoff oder Stickstoff, im Falle einer Luftzerlegungsanlage) in der verfahrenstechnischen Anlage, eine Temperatur einer Komponente der verfahrenstechnischen Anlage, und/oder eine Temperatur und/oder eine Zusammensetzung und/oder ein Druck eines Mediums in der verfahrenstechnischen Anlage entsprechend in dem Modell abgebildet sind. Dies kann beispielsweise durch geeignete Gleichungen erfolgen.

Ausgangswerte, die das Modell dann aus den den Betriebsparametern entsprechenden Eingangswerten ausgibt, sind insbesondere solche Parameter, die indikativ für eine Leistung oder Effizienz der verfahrenstechnischen Anlage sind (engl. "Key Performance Indicators"). Solche Parameter sollen vorliegend mit dem Begriff Leistungsparameter bezeichnet werden. Hierbei kann es sich z.B. um eine Leistungsaufnahme oder einen Wirkungsgrad einer Komponente der verfahrenstechnischen Anlage, eine Leistungsaufnahme oder einen Wirkungsgrad der (gesamten) verfahrenstechnischen Anlage und/oder eine Rückgewinnungsmaß eines Mediums (beispielsweise Argon im Falle einer Luftzerlegungsanlage) in der verfahrenstechnischen Anlage handeln.

Bei einem solchen Modell können nun für einen oder mehrere Betriebsparameter der Anlage idealisierte Annahmen bzw. Werte - also Sollwerte - bestimmt werden, mit denen die Anlage gemäß Vorgabe oder auch beruhend auf Erfahrungswerten (möglichst) optimal läuft, d.h., auch entsprechend (möglichst) optimale Werte für den bzw. die Leistungsparameter aufweist. Hierbei werden, wenn das Modell erstellt wird, beispielsweise auch Umgebungsbedingungen wie Lufttemperatur und Kühlwasservorlauftemperatur berücksichtigt.

Bei dem vorgeschlagenen Verfahren werden nun unter Verwendung des Modells der verfahrenstechnischen Anlage aus während eines Betriebs der verfahrenstechnischen Anlage auftretenden, tatsächlichen Werten wenigstens eines Betriebsparameters der verfahrenstechnischen Anlage, Werte wenigstens eines Leistungsparameters der verfahrenstechnischen Anlage ermittelt. Diese tatsächlichen Werte können beispielsweise gemessen oder aber auch geschätzt werden, beispielsweise mittels eines Beobachters.

Außerdem werden unter Verwendung des Modells aus Sollwerten - also den vorstehend erwähnten, idealisierten Werten bzw. Vorgaben - des wenigstens einen Betriebsparameters Vergleichswerte des wenigstens eines Leistungsparameters der verfahrenstechnischen Anlage ermittelt. Mit anderen Worten werden also unter Verwendung des Modells die Werte für die Leistungsparameter einerseits jeweils aus den idealisierten Vorgaben und andererseits jeweils für die (aktuell) tatsächlich vorhandenen bzw. verwendeten Werten der Betriebsparameter ermittelt.

Basierend auf einander entsprechenden Werten und Vergleichswerten des wenigstens einen Leistungsparameters - also insbesondere Paaren von jeweils einem Wert und einem entsprechenden Vergleichswert, der demselben Betriebszustand bzw. demselben Zeitpunkt entspricht - wird dann wenigstens eine Leistungslücke des Betriebs der verfahrenstechnischen Anlage ermittelt. Hierzu kann im einfachsten Fall eine Differenz von Wert und Vergleichswert gebildet werden.

Unter dem Begriff einer Leistungslücke ist hierbei - ähnlich dem Begriff des Leistungsparameters - eine Lücke bzw. Differenz zwischen dem tatsächlich vorliegenden Wert und dem theoretisch bzw. idealerweise erreichbaren Wert von z.B. einer Leistungsaufnahme zu verstehen. Gleiches gilt für z.B. eine tatsächliche Ausbeute eines rückgewonnen Mediums und eine theoretisch bzw. idealerweise erreichbare Ausbeute. Die auf diese Weise ermittelte Leistungslücke gibt somit ein gewisses Einspar- bzw. Verbesserungspotential für den Betrieb der verfahrenstechnischen Anlage an.

Hierbei ist es auch besonders zweckmäßig, wenn die ermittelte Leistungslücke bzw. die ermittelten, mehreren Leistungslücken - im Falle mehrere Leistungsparameter - auf geeignete Weise für betreffende Stellen oder Personen zugänglich gemacht bzw. zur Verfügung gestellt werden, bzw. allgemein über ein Kommunikationsmittel zur Verfügung gestellt werden. Dies kann beispielsweise - das Verfahren wird zweckmäßigerweise auf einem Rechensystem ausgeführt - durch eine (automatisch versendete) E-Mail oder dergleichen erfolgen. Ebenso kann auch eine Anzeige bzw. Darstellung auf geeigneten Anzeigemitteln, beispielsweise in einem Kontrollraum der verfahrenstechnischen Anlage, erfolgen.

Die Werte und die (zugehörigen) Vergleichswerte des wenigstens einen Leistungsparameters werden dabei zweckmäßigerweise in regelmäßigen zeitlichen Abständen, beispielsweise jede Stunde, und/oder bei vorgegebenen Betriebszuständen, ggf. auch immer nach einem Wechsel eines Betriebszustands, der verfahrenstechnischen Anlage ermittelt. Damit kann erreicht werden, dass möglichst aktuell über etwaige Leistungslücken bzw. Optimierungspotential informiert wird.

Vorzugweise wird anhand einer Vielzahl von einander entsprechenden Werten und Vergleichswerten (also den erwähnten Paaren) des wenigstens eines Leistungsparameters eine statistische Relevanz der wenigstens einen Leistungslücke ermittelt. Dies gilt insbesondere für den Fall mehrerer Leistungsparameter. Dies kann auch als Hypthesentest bezeichnet werden. Hierbei werden die aktuellen, einander entsprechenden Werte und Vergleichswerte, beispielsweise aus den letzten zehn Stunden, z.B. als Stichprobe aus den einander entsprechenden Werten und Vergleichswerten, die zeitlich früher ermittelt wurden, beispielsweise über einen Zeitraum von einem Monat hinweg, betrachtet und hinsichtlich ihrer statistischen Relevanz bewertet. Denkbar ist auch, dass nicht nur die früher ermittelten Werte und Vergleichswerte der betreffenden Anlage heranzogen werden, sondern auch diejenigen von weiteren, vergleichbaren Anlagen.

Hierbei kann z.B. eine häufig auftretende Leistungslücke als besonders relevant und dann beispielsweise als vorrangig zu beheben eingestuft werden. Ebenso kann dies für besonders hohe bzw. große Leistungslücken gelten. Denkbar ist auch, dass ein Schwellwert (z.B. ein Mittelwert) für einen bestimmten Leistungsparameter definiert oder auch aus den zurückliegenden Werten bzw. Vergleichswerten ermittelt wird, und eine aktuelle Leistungslücke nur als relevant eingestuft wird, wenn dieser Schwellwert überschritten ist.

Besonders bevorzugt ist es auch, wenn für die wenigstens eine Leistungslücke eine Verbesserungsmaßnahme ermittelt, und diese dann insbesondere auch - wie auch die Leistungslücke selbst - auf geeignete Weise für betreffende Stellen oder Personen zugänglich gemacht bzw. zur Verfügung gestellt wird. Eine solche Verbesserungsmaßnahme kann beispielsweise in der Veränderung eines Betriebsparameters bestehen. Eine geeignete Maßnahme kann dabei z.B. basierend auf Erfahrungs- oder Testwerten ermittelt werden, denkbar ist aber auch, dass eine solche Maßnahme basierend auf den tatsächlichen Werten und Sollwerten eines Betriebsparameters ermittelt wird. Beispielsweise kann empfohlen werden, einen Wert des Betriebsparameters auf den Sollwert abzuändern oder zumindest in dessen Richtung hin anzupassen. Denkbar sind aber auch vom Betriebsparameter nicht direkt oder auch unabhängige Maßnahmen. Alternativ, kann eine Wartungstätigkeit wie etwa ein Reinigungsvorgang an der Anlage (im Sinne einer Verbesserungsmaßnahme) vorgeschlagen werden. Denkbar ist auch, dass die Verbesserungsmaßnahme sich im Allgemeinen auf das Beheben einer Fehlfunktion der verfahrenstechnischen Anlage bezieht.

Zweckmäßigerweise wird bei der Beurteilung der Relevanz einer Leistungslücke und/oder einer entsprechenden Verbesserungsmaßnahme eine Analyse hinsichtlich mehrerer Betriebszustände der Anlage vorgenommen.

Dabei können statische Signifikanzindikatoren verwendet werden, was eine einfache Implementierung erlaubt, dann aber letztlich immer zur gleichen Beurteilung für gleiche Leistungslücken bzw. Verbesserungsmaßnahmen führt. Zweckmäßig kann aber auch sein, dynamische, d.h. veränderbare, Signifikanzindikatoren zu verwenden, sodass je nach Situation eine detailliertere Beurteilung der Relevanz der Leistungslücken bzw. Verbesserungsmaßnahmen erfolgen kann.

Damit kann erreicht werden, dass vorrangig Optimierungen mit großem Verbesserungspotential vorgenommen werden, weniger relevante hingegen z.B. zurückgestellt werden.

Das vorgeschlagene Verfahren kann grundsätzlich für verschiedenste Arten von verfahrenstechnischen Anlagen verwendet werden, besonders zweckmäßig und vorteilhaft ist es jedoch für Gas behandelnde verfahrenstechnische Anlagen wie eine Luftzerlegungsanlage oder eine Kohlenstoffdioxidanlage, insbesondere eine Kohlenstoffdioxidverflüssigungsanlage, da hier das Optimierungspotential besonders hoch ist. Bei einer Kohlenstoffdioxidverflüssigungsanlage wird ein Stoffstrom, der hauptsächlich bzw. signifikant Kohlenstoffdioxid enthält, veredelt, indem Verunreinigungen entfernt werden und das so aufgereinigte Kohlenstoffdioxid verflüssigt wird.

Ein besonderer Vorteil des vorgeschlagenen Verfahrens und der Verwendung des Modells der verfahrenstechnischen Anlage ist, dass die Genauigkeit, mit der das Modell die verfahrenstechnische Anlage abbildet, eher von untergeordneter Bedeutung ist, da sowohl die Werte als auch die Vergleichswerte des wenigstens einen Leistungsparameters mittels desselben Modells ermittelt werden. Etwaige Unzulänglichkeiten im Modell wirken sich daher - zumindest in guter Näherung - gleichermaßen auf die Werte und die Vergleichswerte aus, was bei der Differenzbildung jedoch keinen bis kaum Einfluss hat.

Gegenstand der Erfindung ist weiterhin ein Rechensystem (bzw. eine Recheneinheit) zur Überwachung einer verfahrenstechnischen Anlage, das, insbesondere programmtechnisch, dazu eingerichtet ist, ein erfindungsgemäßes Verfahren durchzuführen. Ein solches Rechensystem kann beispielsweise separat zu einer Anlage vorgesehen werden, jedoch auch in ein Steuerungs- und/oder Regelsystem für eine solche Anlage integriert sein.

Gegenstand der Erfindung ist weiterhin eine verfahrenstechnische Anlage, insbesondere eine Gas behandelnde verfahrenstechnische Anlage, mit einem erfindungsgemäßen Rechensystem.

Die Erfindung wird nachfolgend unter Bezugnahme auf die beigefügte Zeichnung näher erläutert, welche verschiedene Anlagenteile zeigt, anhand derer die erfindungsgemäßen Maßnahmen erläutert werden.

### Kurze Beschreibung der Zeichnung

- Figur 1: zeigt schematisch einen Ablauf eines erfindungsgemäßen Verfahrens in einer bevorzugten Ausführungsform.
- Figur 2: zeigt schematisch eine Darstellung von Leistungslücken bei einem erfindungsgemäßen Verfahren in einer bevorzugten Ausführungsform.
- Figur 3: zeigt schematisch eine Darstellung von Leistungslücken bei einem erfindungsgemäßen Verfahren in einer weiteren bevorzugten Ausführungsform.

### Ausführliche Beschreibung der Zeichnung

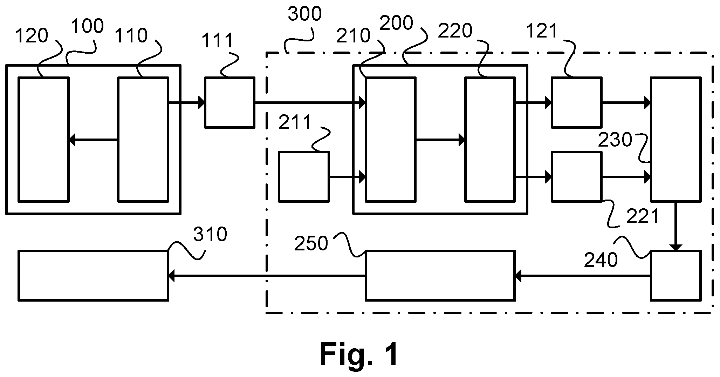

In Figur 1 ist schematisch ein Ablauf eines erfindungsgemäßen Verfahrens in einer bevorzugten Ausführungsform dargestellt. Hierzu ist eine verfahrenstechnische Anlage 100, beispielsweise eine Luftzerlegungsanlage, grob schematisch dargestellt.

Beispielhaft sind hierfür ein Betriebsparameter 110 sowie ein Leistungsparameter 120, wobei letzterer durch ersteren beeinflusst wird, angedeutet. Wie schon erwähnt kann es sich bei dem Betriebsparameter beispielsweise um einen Fluss eines Mediums oder eine Temperatur handeln, bei dem Leistungsparameter beispielsweise um eine Leistungsaufnahme der verfahrenstechnischen Anlage oder um ein Rückgewinnungsmaß eines Mediums. Es versteht sich, dass in einer typischen verfahrenstechnischen Anlage mehrere verschiedene Betriebsparameter und mehrere verschiedene Leistungsparameter vorhanden sind.

Weiterhin ist ein Rechensystem 300 gezeigt, beispielsweise ein Computer, auf dem das vorgeschlagene Verfahren zum Überwachen der verfahrenstechnischen Anlage 100 durchgeführt werden kann. Hierzu wird, beispielsweise im Rahmen eines geeigneten Programms, ein Modell 200 der verfahrenstechnischen Anlage 100 verwendet, mit dem die verfahrenstechnische Anlage möglichst realitätsgetreu abgebildet wird. Beispielhaft sind hierzu auch ein Betriebsparameter 210 sowie ein Leistungsparameter 220 vorgesehen, die dem Betriebsparameter 110 bzw. dem Leistungsparameter 120 entsprechen.

Es versteht sich, dass in dem Modell 200 diejenigen Betriebsparameter bzw. Leistungsparameter abgebildet sind, hinsichtlich welcher die Überwachung erfolgen soll. Der reale Zusammenhang zwischen Betriebsparameter und Leistungsparameter kann in dem Modell 200 beispielsweise durch geeignete Gleichungen dargestellt werden.

Das Modell 200 wird dabei mit Eingabewerten gespeist und es gibt entsprechende Ausgabewerte aus, und zwar so, wie dies (idealerweise) auch beim Betrieb der Anlage 100 selbst der Fall wäre. Hierbei werden für den Betriebsparameter 110 bzw. 210 (dies gilt dann entsprechend für den Fall mehrerer Betriebsparameter) idealisierte Annahmen bzw. Werte - also Sollwerte - bestimmt, mit denen die Anlage gemäß Vorgabe oder auch beruhend auf Erfahrungswerten (möglichst) optimal läuft, d.h., auch entsprechend (möglichst) optimale Werte für Leistungsparameter aufweist. Beispielhaft ist ein solcher Sollwert mit 211 dargestellt.

Bei dem vorgeschlagenen Verfahren werden nun die tatsächlichen bzw. gemessenen oder geschätzten Werte 111 des Betriebsparameters 110 bzw. 210 verwendet, um mit dem Modell 200 einen entsprechenden Wert 121 des zugehörigen Leistungsparameters 120 bzw. 220 zu ermitteln. Zugleich bzw. parallel wird auch aus dem idealisierten Wert bzw. Sollwert 211 der entsprechende Wert, hier als Vergleichswert 221 bezeichnet, mittels des Modells 221 ermittelt bzw. berechnet. Es werden also unter Verwendung des Modells 200 die Werte für die Leistungsparameter einmal aus den idealisierten Vorgaben und einmal aus den (aktuell) tatsächlich vorhandenen Werten der Betriebsparameter ermittelt.

Basierend auf den einander entsprechenden Werten 121 und Vergleichswerten 221 des Leistungsparameters 120 bzw. 220 - also insbesondere Paaren von jeweils einem Wert und einem entsprechenden Vergleichswert, der demselben Betriebszustand bzw. demselben Zeitpunkt entspricht - wird dann eine Leistungslücke 230 des Betriebs der verfahrenstechnischen Anlage 100 ermittelt. Hierzu wird im einfachsten Fall eine Differenz von Wert 121 und Vergleichswert 221 gebildet.

Unter dem Begriff einer Leistungslücke ist hierbei beispielsweise - wie schon erwähnt - eine Lücke bzw. Differenz zwischen der tatsächlich vorliegenden und der theoretisch bzw. idealerweise erreichbaren Leistungsaufnahme zu verstehen. Die auf diese Weise ermittelte Leistungslücke 230 gibt somit ein gewisses Einspar- bzw. Verbesserungspotential für den Betrieb der verfahrenstechnischen Anlage 100 an.

Basierend auf über die Zeit angefallenen Daten zu Leistungslücken kann nun für einen aktuellen Wert einer Leistungslücke beispielsweise im Rahmen einer statistischen Analyse 240 eine statistische Relevanz der Leistungslücke 230 ermittelt werden. Weiterhin kann, zusätzlich oder alternativ, eine Verbesserungsmaßnahme 250 ermittelt werden, die angibt, wie das aufgrund der erkannten Leistungslücke vorhandene Potential für einen effizienteren Betrieb der verfahrenstechnischen Anlage 100 besser ausgeschöpft werden kann. Sowohl die Leistungslücke als auch die Verbesserungsmaßnahme können dann über ein Kommunikationsmittel 310 zur Verfügung gestellt werden. Bei dem Kommunikationsmittel kann es sich beispielsweise um ein (digitales) Anzeigemittel oder eine E-Mail handeln, die dann entsprechend an betreffende Personen versendet wird.

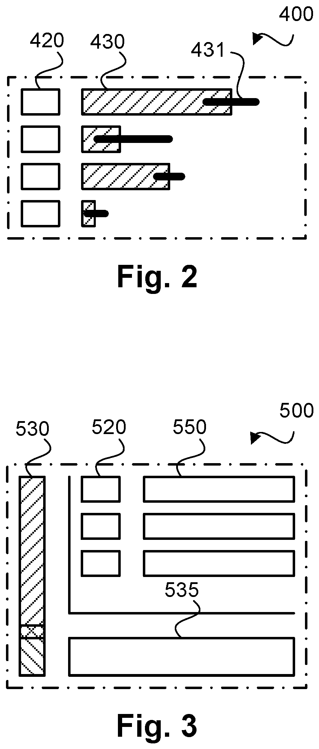

In Figur 2 ist schematisch eine Darstellung von Leistungslücken bei einem erfindungsgemäßen Verfahren in einer bevorzugten Ausführungsform gezeigt. Hierzu ist beispielhaft ein Anzeigemittel 400 als Kommunikationsmittel mit entsprechendem Inhalt gezeigt.

Dort sind beispielhaft links in einer Spalte übereinander vier verschiedene Leistungsparameter aufgeführt, wovon einer mit 420 bezeichnet ist. Rechts daneben sind die zu den Leistungsparametern gehörigen Leistungslücken 430 bzw. die entsprechenden Werte oder Beträge in Form eines Balkens mit Unsicherheit dargestellt. Beispielhaft ist eine der Leistungslücken mit 430 bezeichnet, die zugehörige Unsicherheit mit 431. Eine solche Darstellung von Leistungslücken kann entsprechenden Personen einen schnellen Überblick darüber verschaffen, wo Einsparmöglichkeiten bzw. Effizienzsteigerungen möglich sind.

In Figur 3 ist schematisch eine Darstellung von Leistungslücken bei einem erfindungsgemäßen Verfahren in einer weiteren bevorzugten Ausführungsform gezeigt. Hierzu ist beispielhaft eine E-Mail 500 als Kommunikationsmittel mit entsprechendem Inhalt gezeigt.

Dort sind beispielhaft links übereinander verschiedene Leistungslücken mit entsprechenden Werten dargestellt, anhand welcher ein gesamtes Einsparpotential erkannt werden kann. Beispielhaft ist eine der Leistungslücken mit 530 bezeichnet, mit 535 ist eine Legende angedeutet, anhand welcher beispielsweise die einzelnen Balken links den Leistungsparametern zuordenbar sind.

In dem Bereich rechts oben sind drei verschiedene Leistungsparameter aufgeführt, wovon einer mit 520 bezeichnet ist. Rechts daneben sind die zu den Leistungsparametern gehörigen, ggf. analytisch ermitteln, Verbesserungsmaßnahmen eingeblendet, wovon eine mit 550 bezeichnet ist. Eine solche Darstellung von Leistungslücken und Verbesserungsmaßnahmen kann entsprechenden Personen einen schnellen Überblick darüber verschaffen, wie Einsparmöglichkeiten bzw. Effizienzsteigerungen besonders einfach und schnell möglich bzw. erreichbar sind.

Denkbar ist auch, dass der beispielhaft gezeigte Inhalt der E-Mail interaktiv gestaltet ist.

Insgesamt kann mit dem vorgeschlagenen und anhand von Beispielen erläuterten Verfahren eine besonders einfache, schnelle und effiziente Verbesserung eines Betriebs einer verfahrenstechnischen Anlage erreicht werden, indem insbesondere automatisiert Einsparmöglichkeiten aufgezeigt und Verbesserungsmaßnahmen vorgeschlagen werden.

## Patentansprüche

1. Verfahren zum Überwachen einer verfahrenstechnischen Anlage (100), wobei das Verfahren von einem Rechensystems (300) ausgeführt wird,
wobei, von dem dem Rechensystems (300), während eines Betriebs der verfahrenstechnischen Anlage (100) auftretende, tatsächliche Werte (111) wenigstens eines Betriebsparameters (110, 210) der verfahrenstechnischen Anlage empfangen werden,
wobei unter Verwendung eines Modells (200) der verfahrenstechnischen Anlage (100), aus den während des Betriebs der verfahrenstechnischen Anlage (100) auftretenden, tatsächlichen Werten (111) des wenigstens einen Betriebsparameters (110, 210) der verfahrenstechnischen Anlage, Werte (121) wenigstens eines Leistungsparameters (120, 220, 420, 520) der verfahrenstechnischen Anlage (100) ermittelt werden,
wobei unter Verwendung des Modells (200) aus Sollwerten (100) des wenigstens einen Betriebsparameters (110, 210) Vergleichswerte (221) des wenigstens einen Leistungsparameters (120, 220, 420, 520) der verfahrenstechnischen Anlage (100) ermittelt werden, und
wobei basierend auf einander entsprechenden Werten (121) und Vergleichswerten (221) des wenigstens einen Leistungsparameters (120, 220, 420, 520) wenigstens eine Leistungslücke (230, 430, 530) des Betriebs der verfahrenstechnischen Anlage (100) ermittelt wird.

2. Verfahren nach Anspruch 1, wobei die Werte (121) und die Vergleichswerte (221) des wenigstens einen Leistungsparameters (120, 220, 420, 520) in regelmäßigen zeitlichen Abständen und/oder bei vorgegebenen Betriebszuständen der verfahrenstechnischen Anlage (100) ermittelt werden.

3. Verfahren nach Anspruch 1 oder 2, wobei anhand einer Vielzahl von einander entsprechenden Werten (121) und Vergleichswerten (221) des wenigstens eines Leistungsparameters (120, 220, 420, 520) eine statistische Relevanz der wenigstens einen Leistungslücke (230, 430, 530) ermittelt wird.

4. Verfahren nach einem der vorstehenden Ansprüche, wobei für die wenigstens eine Leistungslücke (230, 430, 530) eine Verbesserungsmaßnahme (250, 550) ermittelt wird.

5. Verfahren nach Anspruch 4, wobei die Verbesserungsmaßnahme (250, 550) basierend auf statischen Signifikanzindikatoren ermittelten wird.

6. Verfahren nach Anspruch 4, wobei die Verbesserungsmaßnahme (250, 550) basierend auf dynamischen Signifikanzindikatoren ermittelten wird.

7. Verfahren nach einem der vorstehenden Ansprüche, wobei der wenigstens einen Betriebsparameter (110, 210) ausgewählt ist aus einem Fluss eines Mediums in der verfahrenstechnischen Anlage, einer Temperatur einer Komponente der verfahrenstechnischen Anlage, einer Temperatur eines Mediums in der verfahrenstechnischen Anlage, einem Druck eines Mediums in der verfahrenstechnischen Anlage und einer Zusammensetzung eines Mediums in der verfahrenstechnischen Anlage.

8. Verfahren nach einem der vorstehenden Ansprüche, wobei der wenigstens eine Leistungsparameter (120, 220, 420, 520) ausgewählt ist aus einer Leistungsaufnahme einer Komponente der verfahrenstechnischen Anlage, einer Leistungsaufnahme der verfahrenstechnischen Anlage, einem Rückgewinnungsmaß eines Mediums in der verfahrenstechnischen Anlage, einem Wirkungsgrad einer Komponente der verfahrenstechnischen Anlage und einem Wirkungsgrad der verfahrenstechnischen Anlage.

9. Verfahren nach einem der vorstehenden Ansprüche, wobei die wenigstens eine Leistungslücke (230, 430, 530) und/oder, in Rückzug auf einen der Ansprüche 4 bis 6, die wenigstens eine Verbesserungsmaßnahme (250, 550) über ein Kommunikationsmittel (310, 400, 500) zur Verfügung gestellt werden.

10. Verfahren nach Anspruch 9, wobei als verfahrenstechnische Anlage (100) eine Luftzerlegungsanlage oder eine Kohlenstoffdioxidverflüssigungsanlage verwendet wird.

11. Rechensystem (300) zur Überwachung einer verfahrenstechnischen Anlage, das dazu eingerichtet ist, ein Verfahren nach einem der vorstehenden Ansprüche durchzuführen.

12. Verfahrenstechnische Anlage (100), insbesondere Gas behandelnde verfahrenstechnischen Anlage, mit einem Rechensystem (300) nach Anspruch 11.

## Claims

1. Method for monitoring a process engineering installation (100), wherein the method is carried out by a computing system (300),
wherein actual values (111) of at least one operating parameter (110, 210) of the process engineering installation occurring during operation of the process engineering installation (100) are received by the computing system (300),
wherein values (121) of at least one performance parameter (120, 220, 420, 520) of the process engineering installation (100) are determined, using a model (200) of the process engineering installation (100), from the actual values (111) of the at least one operating parameter (110, 210) of the process engineering installation occurring during the operation of the process engineering installation (100),
wherein comparative values (221) of the at least one performance parameter (120, 220, 420, 520) of the process engineering installation (100) are determined, using the model (200), from setpoint values (100) of the at least one operating parameter (110, 210), and
wherein at least one performance gap (230, 430, 530) of the operation of the process engineering installation (100) is determined based on mutually corresponding values (121) and comparative values (221) of the at least one performance parameter (120, 220, 420, 520).

2. Method according to claim 1, wherein the values (121) and the comparative values (221) of the at least one performance parameter (120, 220, 420, 520) are determined at regular time intervals and/or given predetermined operating states of the process engineering installation (100).

3. Method according to claim 1 or 2, wherein a statistical relevance of the at least one performance gap (230, 430, 530) is determined using a plurality of mutually corresponding values (121) and comparative values (221) of the at least one performance parameter (120, 220, 420, 520).

4. Method according to any one of the preceding claims, wherein an improvement measure (250, 550) is determined for the at least one performance gap (230, 430, 530).

5. Method according to claim 4, wherein the improvement measure (250, 550) is determined on the basis of static significance indicators.

6. Method according to claim 4, wherein the improvement measure (250, 550) is determined based on dynamic significance indicators.

7. Method according to any one of the preceding claims, wherein the at least one operating parameter (110, 210) is selected from a flow of a medium in the process engineering installation; a temperature of a component of the process engineering installation; a temperature of a medium in the process engineering installation; a pressure of a medium in the process engineering installation; and a composition of a medium in the process engineering installation.

8. Method according to any one of the preceding claims, wherein the at least one performance parameter (120, 220, 420, 520) is selected from a power consumption of a component of the process engineering installation; a power consumption of the process engineering installation; a recovery rate of a medium in the process engineering installation; a degree of efficiency of a component of the process engineering installation; and a degree of efficiency of the process engineering installation.

9. Method according to any one of the preceding claims, wherein the at least one performance gap (230, 430, 530) and/or, in reference to any one of claims 4 to 6, the at least one improvement measure (250, 550) is provided via a communication means (310, 400, 500).

10. Method according to claim 9, wherein an air separation installation or a carbon dioxide liquefaction installation is used as the process engineering installation (100).

11. Computing system (300) for monitoring a process engineering installation, which is configured to implement a method according to any one of the preceding claims.

12. Process engineering installation (100), in particular a gas-treating process engineering installation, having a computing system (300) according to claim 11.

## Revendications

1. Procédé pour la surveillance d'une installation de la technique des procédés (100), dans lequel le procédé est exécuté par un système de calcul (300),
dans lequel des valeurs réelles (111) d'au moins un paramètre de fonctionnement (110, 210) de l'installation de la technique des procédés sont reçues par le le système de calcul (300) pendant un fonctionnement de l'installation de la technique des procédés (100),
dans lequel, en utilisant un modèle (200) de l'installation de la technique des procédés (100), des valeurs (121) d'au moins un paramètre de puissance (120, 220, 420, 520) de l'installation de la technique des procédés (100) sont déterminées à partir des valeurs réelles (111) de l'au moins un paramètre de fonctionnement (110, 210) de l'installation de la technique des procédés qui apparaissent pendant le fonctionnement de l'installation de la technique des procédés (100),
dans lequel, en utilisant le modèle (200), des valeurs de comparaison (221) de l'au moins un paramètre de puissance (120, 220, 420, 520) de l'installation de la technique des procédés (100) sont déterminées à partir de valeurs de consigne (100) de l'au moins un paramètre de fonctionnement (110, 210), et
dans lequel, sur la base de valeurs (121) et de valeurs de comparaison (221) se correspondant mutuellement de l'au moins un paramètre de puissance (120, 220, 420, 520), au moins un écart de puissance (230, 430, 530) du fonctionnement de l'installation de la technique des procédés (100) est déterminé.

2. Procédé selon la revendication 1, dans lequel les valeurs (121) et les valeurs de comparaison (221) de l'au moins un paramètre de puissance (120, 220, 420, 520) sont déterminées à intervalles de temps réguliers et/ou dans des états de fonctionnement prédéfinis de l'installation de la technique des procédés (100).

3. Procédé selon la revendication 1 ou 2, dans lequel une pertinence statistique de l'au moins un écart de puissance (230, 430, 530) est déterminée à l'aide d'une pluralité de valeurs (121) et de valeurs de comparaison (221) se correspondant mutuellement de l'au moins un paramètre de puissance (120, 220, 420, 520).

4. Procédé selon l'une des revendications précédentes, dans lequel une mesure d'amélioration (250, 550) est déterminée pour l'au moins un écart de puissance (230, 430, 530).

5. Procédé selon la revendication 4, dans lequel la mesure d'amélioration (250, 550) est déterminée sur la base d'indicateurs de signification statiques.

6. Procédé selon la revendication 4, dans lequel la mesure d'amélioration (250, 550) est déterminée sur la base d'indicateurs d'importance dynamiques.

7. Procédé selon l'une des revendications précédentes, dans lequel l'au moins un paramètre de fonctionnement (110, 210) est choisi parmi un flux d'un milieu dans l'installation de la technique des procédés, une température d'un composant de l'installation de la technique des procédés, une température d'un milieu dans l'installation de la technique des procédés, une pression d'un milieu dans l'installation de la technique des procédés et une composition d'un milieu dans l'installation de la technique des procédés.

8. Procédé selon l'une des revendications précédentes, dans lequel l'au moins un paramètre de puissance (120, 220, 420, 520) est choisi parmi une puissance absorbée d'un composant de l'installation de la technique des procédés, une puissance absorbée de l'installation de la technique des procédés, un taux de récupération d'un milieu dans l'installation de la technique des procédés, un rendement d'un composant de l'installation de la technique des procédés et un rendement de l'installation de la technique des procédés.

9. Procédé selon l'une des revendications précédentes, dans lequel l'au moins un écart de puissance (230, 430, 530) et/ou, en référence à l'une des revendications 4 à 6, l'au moins une mesure d'amélioration (250, 550) sont mis à disposition par l'intermédiaire d'un moyen de communication (310, 400, 500).

10. Procédé selon la revendication 9, dans lequel une installation de séparation d'air ou une installation de liquéfaction de dioxyde de carbone est utilisée comme installation de la technique des procédés (100).

11. Système de calcul (300) pour la surveillance d'une installation de la technique des procédés, lequel est configuré pour mettre en œuvre un procédé selon l'une des revendications précédentes.

12. Installation de la technique des procédés (100), en particulier installation de la technique des procédés pour le traitement de gaz, comportant un système de calcul (300) selon la revendication 11.
